# EUROPEAN PATENT SPECIFICATION

(11) **EP 1 895 831 B1**
(45) Date of publication and mention of the grant of the patent: **24.04.2013**
(21) Application number: 06741333.6
(22) Date of filing: 30.05.2006
(51) Int. Cl.: A01F 15/04, A01F 15/08, A01F 25/14

(54) **Manufacturing process of vacuum packed silage.**
herstellungsverfahren einer vakuumverpackten Silage.
Procédé de fabrication de produits d'ensilage conditionnés sous vide.

(30) Priority: 01.06.2005 BR PI5027691
(43) Date of publication of application: 12.03.2008
(73) Proprietor: Marcondes, Luiz Sergio Prestes, 84051530 Ponta Grossa (BR)
(72) Inventor: Marcondes, Luiz Sergio Prestes, 84051530 Ponta Grossa (BR)
(74) Representative: Lorente Berges, Ana
(86) International application number: PCT/BR2006/000106
(87) International publication number: WO 2006/128267

(56) References cited:
- DE-A1- 10 241 788
- US-A- 2 114 104
- US-A- 2 114 104
- US-A- 4 581 764
- US-A- 5 088 271
- US-A- 5 509 256
- US-A- 5 689 941

## Description

The present patent relates to agricultural processes and products in general, more specifically to a manufacturing process of vacuum packed silage which, according to the general characteristics thereof, possesses as a basic principle to provide, by means of a proprietary and specific industrialized process, the manufacturing of an end product fully based on vacuum packed silages, that is, vacuum packing green forage to feed animals in general, with the purpose of providing a fully mechanized and optimized manufacturing process, and a silage of high nutritional and hygienic quality and, mainly, high durability, and having as a basis a packed silage of great durability, versatility and nutritious capacity. With a specific process for a better adaptation and safety for the users, practical handling and functionality, accessible cost and due to its general characteristics and dimensions, is easily adaptable to the most varied types of green forage or similar items, users and places in general, regardless of the characteristics thereof.

The patent in question is characterized in that it aggregates components and processes in a differentiated concept to meet the several requirements the nature of its use demands, that is, the attainment of a vacuum packed silage with high durability, that is, an extended application interval. Such concept provides a manufacturing process and an end product having great efficiency, functionality, strength, durability, versatility, accuracy and nutritional capacity due to its excellent technical qualities, thereby providing advantages and improvements to the transportation and storage of silages in general, the general characteristics of which differ from the other shapes and models of silages known in the current state of the art.

US-A-5689941 discloses a manufacturing process of vacuum packed silage wherein a compression step is carried out before the bagging step.

The present patent consists in the utilization of a modem, efficient, safe and functional manufacturing process of vacuum packed silage formed by an assembly of properly incorporated agricultural, mechanical and physico-chemical solutions comprising a complete e differentiated end product of vacuum packed silage of high durability and excellent finish qualities which, due to its proper characteristics, is achieved by means of a proper and specific manufacturing process incorporating an assembly of successive and properly integrated operations formed by a harvesting and chopping phase of the green forage in the fields as a preparation thereof, a packing and weighting phase, a pressing phase to arrange the green forage, a bag vacuum phase to remove air from the bag and a storage phase to allow the green forage to ferment, so as to provide the formation of a unique, complete and safe assembly, whose shapes and internal and external arrangements provide the vacuum packing of several types of green forage, with the specific purpose of providing the application of silages irrespective of the storage and transportation conditions that may be found.

Cattle, be that dairy cattle or beef cattle, need high quality food throughout the year. Weather conditions in most regions, however, does not allow for green pastures during every month of the year. Result: in the rainy season, pastures abound; in the dry season, they are in shortage; in wintertime, they are completely destroyed by the snow and frost; in many regions, the cattle starve to death. And that in normal conditions, when no droughts, rainfalls or extended winters occur or even during the attack of plagues or diseases, which worsens the situation even more. Throughout the centuries, though, countries with advanced agriculture have learned how to overcome such problems, mainly due to the development of methods of preserving green material for cattle feed during pasture shortage months, being the ensilage process the most important one among those methods, an extremely simple, economical, and practical way - therefore, within the range of any cattle breeder - of storing forage for a long period of time, provided special conditions are kept, and preserving almost of all of the properties of its nutrients and comprising the entire silage production process, which includes forage plantation, and its subsequent harvesting, fragmentation, transport, silo loading, compacting, sealing and use of the ready product.

Silage is the product of the fermentation process of green forage in special conditions, for a certain period of time, provided it is completely protected from air, being this factor - absence of air - the most important requirement to achieve proper results in the production of silage and the durability thereof. Silage preserves the properties of forage for several months in the absence of oxygen, during which it is used as food for the cattle, mainly dairy cows. This way, silage is a way of making the cost of production cheaper, thus saving in rations and other types of cattle food. The practice of ensilage has been shown to be highly feasible, for besides providing plenty of food for the cattle throughout the year, irrespective of the weather conditions, the cattle farmer yields greater productivity in milk and beef when supplying animals with silage associated with other foods.

During the ensilage process, forage remains alive after harvesting, that is, its cells use oxygen and feed themselves from the reserves found in the plant tissues; the plants, along with the soil and the atmosphere, contain several microorganisms (bacteria, fungi, etc.) that can develop in favorable conditions, like moisture, proper temperature and the absence of air. After harvesting, chopping and loading forage in the silo, bacterial action starts and, as the silo must be loaded by eliminating as much oxygen as possible from the mass and fully excluding air and water seepage, the residual oxygen is consumed by the plant cells that help start the bacteria anaerobic (free of oxygen) reaction, that is, the fermentation of forage, a process which is concluded after a thirty-day cycle, upon reaching stability. At such specific conditions, the silage will keep for an indefinite period of time providing it does not enter in contact with air and water, thus keeping its properties, taste and smell favored by the cattle; otherwise, it must be quickly consumed.

Thus, the main inconvenient of the shapes and models of silages known in the current state of the art is the storage and transportation thereof, due mainly to the high degree of spoilage and extremely low durability; current processes allow silages to be marketed for a maximum period of twenty four hours in the presence of air; beyond that, they spoil.

In view of those inconveniences, the general concept of the manufacturing process and end product of vacuum packed silage is based on packing the forage in a bag immediately after its harvesting, so as to undergo the anaerobic fermentation process and, consequently, originate the silage end product, that is to say, the fermentation of vacuum packed green forage occurs directly inside the bag over a 20 to 30 day period. After that time, silage is ready to be directly consumed by the animals, and provided it is kept inside the bag, it can be stored for the same period of time as a conventional silage, that is, more than one year; as long as the bag is sealed, there is no oxygen contact and, therefore, no product spoilage. Thus, marketing of silage, currently restricted due to its sudden deterioration, is hugely facilitated, because packed silage can be transported and stored for longer periods and in several different quantities, being suitable for animal consumption for a long period of time, to be used in the proper time and amount required.

The objects, advantages and other characteristics of the patent in question can be more easily understood when read jointly with the appended drawings, wherein:

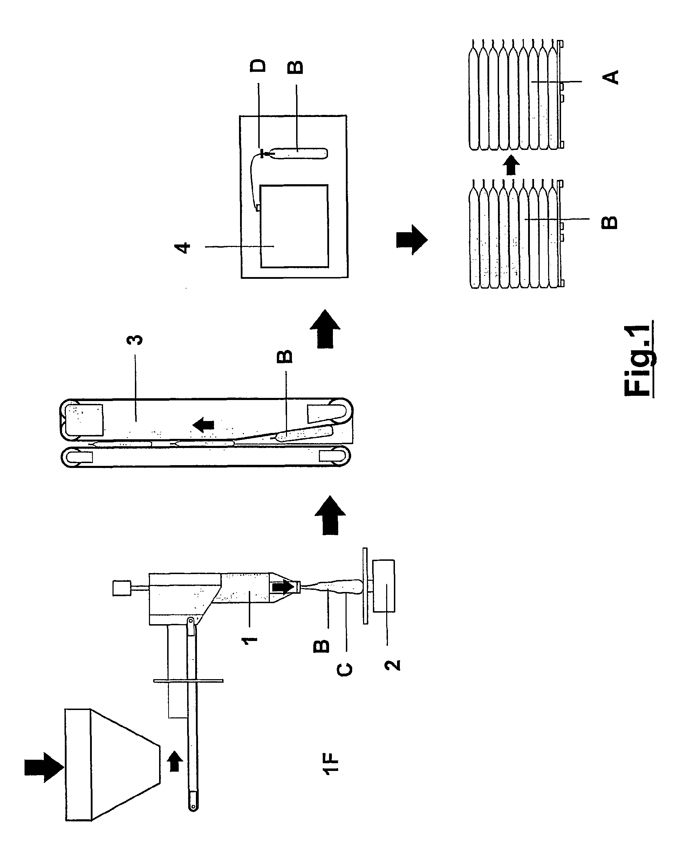

Figure 1 is a schematic view of the manufacturing process of vacuum-packed silage.

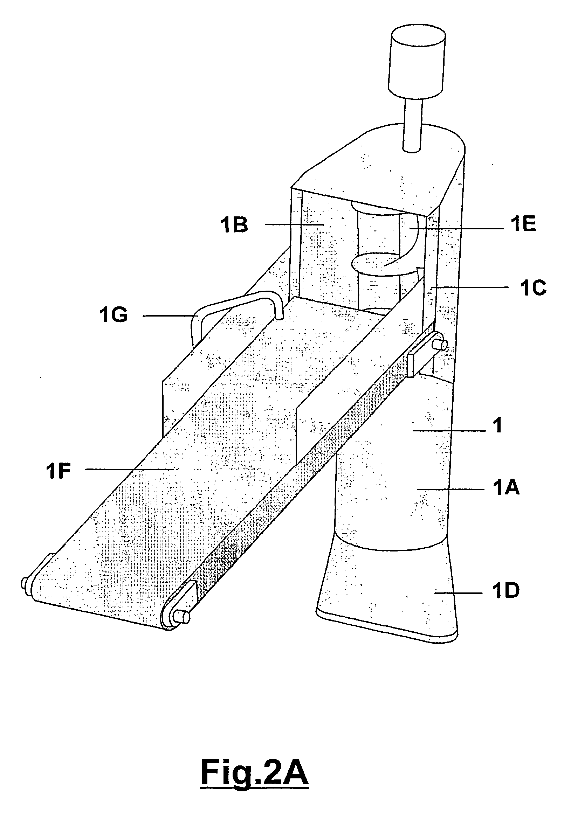

Figure 2A is a perspective view of the bag filling machine in the configuration with a thread applied in the manufacturing process of vacuum packed silage.

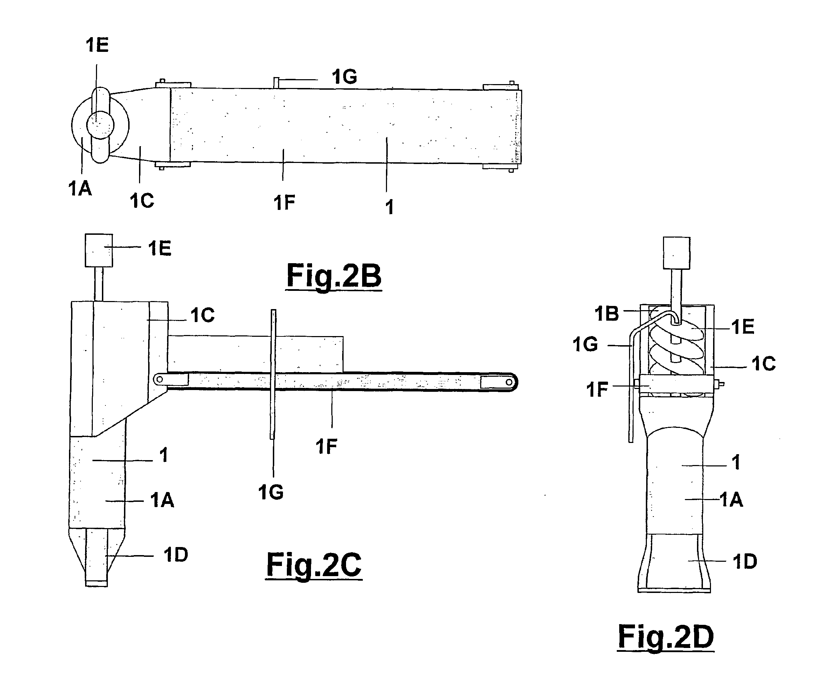

Figure 2B is an upper view of the bag filling machine in the configuration with a thread applied in the manufacturing process of vacuum packed silage.
Figure 2C is a side plan view of the bag filling machine in the configuration with a thread applied in the manufacturing process of vacuum packed silage.
Figure 2D is a front view of the bag filling machine in the configuration with a thread applied in the manufacturing process of vacuum packed silage.

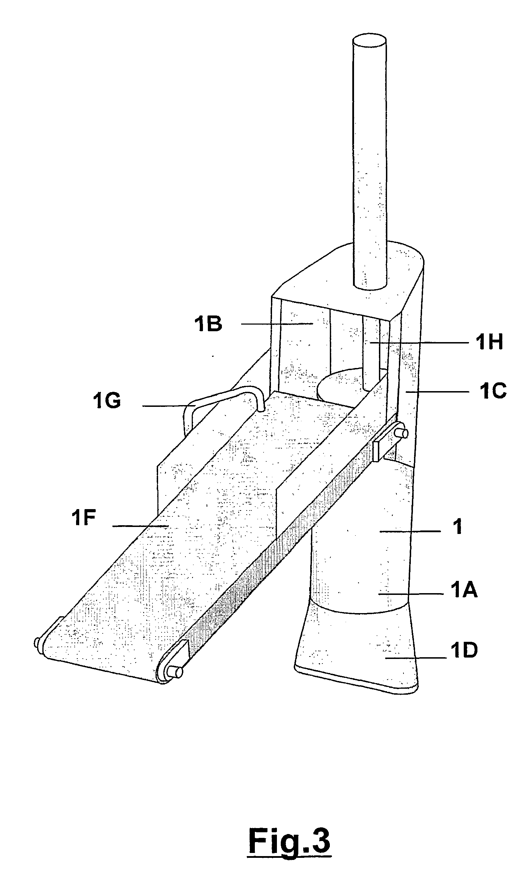

Figure 3 is a perspective view of the bag filling machine in the configuration with a piston applied in the manufacturing process of vacuum packed silage.

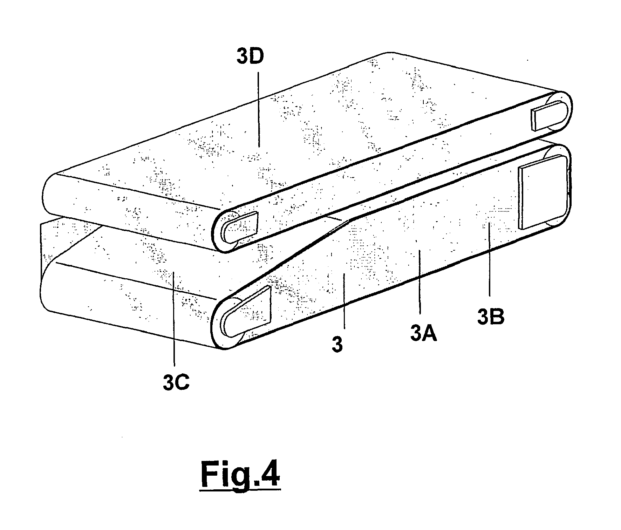

Figure 4 is a perspective view of the conveyor belt press applied in the manufacturing process of vacuum-packed silage.

As can be inferred from the appended drawings that illustrate and integrate the present descriptive report of the patent of invention of "Manufacturing Process of Vacuum Packed Silage", Figure (1) shows the same in a general manner, comprising a complete end product of vacuum packed silage (A) with proprietary characteristics incorporating a proper and specific structure of the pressed and vacuum bagged type, of high durability and excellent end qualities, fully free of air, having a general shape similar to that of the bag and filled with the most varied types of chopped green forage (B), the vacuum packed silage (A) being achieved by a proprietary and specific process incorporating an assembly of successive and properly integrated operations formed by a harvesting and chopping phase of the green forage directly in the fields in a manual or mechanized way, so as to produce a chopped green forage mass (B); a packing and weighting phase of the chopped green forage (B) carried out in a bag filling machine (1) and scales (2), for compactly loading the chopped green forage (B) inside bags (C) using the bag filling machine (1) according to the weight supported by the bag (C) using the scales (2); a pressing phase of the chopped green forage mass (B) and bags (C) carried out in a conveyor belt press (3), for the proper loading of the chopped green forage mass (B) together with the almost full exclusion of air inside the bags (C); immediately after the pressing phase, a clamp (D) is symmetrically arranged along the periphery of the bag top opening (C) to fully close it; a vacuum phase of the chopped green forage mass (B) and bags (C) carried out in a vacuum pump (4), to pack the chopped green forage mass (B) inside bags (C) with the absence of air inside it, and immediately after the vacuum process, the clamp is removed (D) and a seal is applied symmetrically along the periphery of the bag top opening (C) to fully seal it; and a storage phase of the chopped green forage mass (B) and bags (C) for storage and fermentation thereof for over a 20 to 30 day period and, consequently, producing the end product, the vacuum packed silage (A) ready to use and with a durability of more than a year.

The bag filling machine (1), as shown from Figures (2A) to (2D), comprises a structure having a general shape similar to an inclined "T" possessing a central body (1A) of general cylindrical hollow shape vertically and symmetrically arranged and having a front opening (1B) of general rectangular shape vertically and symmetrically centered on the frontal face, a front flap (1C) having a general trapezoidal shape vertically, symmetrically and frontally aligned with the front opening (1B), a bottom mouth (1D) having a general shape similar to a funnel with an oblong lower end vertically and symmetrically centered in the lower end and an inner thread (1E) having a general spiral shape vertically and symmetrically centered along the periphery of the inner side, the entire assembly performing the main function of compactly loading the chopped green forage (B) inside bags (C); a front conveyor belt (1F) having a general parallelepipedal shape horizontally and symmetrically aligned with the front opening (1B) and the front flap (1C), with the main function of guiding the chopped green forage mass (B) to inside the central body (1A); an additive device (1G) having a general tubular shape vertically and symmetrically arranged over the front conveyor belt (1F) and close to the front flap (1C), performing the main function of adding additives to the chopped green forage mass (B) before compacting and packing; and an electric motor symmetrically arranged close to the central body (1A), performing the main function of driving the inner thread (1E) and the front conveyor belt (1F).

The bag filling machine (1), as shown on Figure (3), can be comprised by an inner piston (1H) having a general cylindrical shape vertically and symmetrically centered along the periphery of the central body inner side (1A) instead of the inner thread (1E), performing the main function of compactly loading the chopped green forage mass (B).

The conveyor belt press (3), as shown on Figure (4), comprises a central structure (3A) having a general parallelepipedal shape and a lower conveyor belt (3B) having a general trapezoidal shape horizontally and symmetrically arranged along the periphery of the lower side, the chamfer (3C) being symmetrically arranged on its front end; an upper conveyor belt (3D) having a general parallelepipedal shape horizontally, paralellaly and symmetrically arranged along the periphery of the upper side and the lower conveyor belt (3B); and an electric motor performing the basic function of driving the lower and upper conveyor belts (3B) and (3D); the chopped green forage mass (B) and bags (C) crosses the central structure center (3A), that is, symmetrically between the lower and upper conveyor belts (3B) and (3D).

For all of the above, this is a process that will be well received by cattle breeders in general, since the present manufacturing process and end product of vacuum packed silage presents several advantages, such as: great safety, reliability and agility in its application; great productivity and performance due to its general concept; great strength and durability, and lower or no wear of the assembly as a whole; greater comfort, facility and safety for the users in general; practical and safe usage by any users anywhere; a perfect and direct adaptation to several types of chopped green forage (B); fully accessible costs which provides an optimum cost/benefit ratio; low weight and general dimensions; great mobility and flexibility allowing an easy transportation; large range of application; very low cost and practical maintenance; and the certainty of always having a product that fully meets the required conditions for its application such as productivity and hygiene.

For all of the above, the manufacturing process of vacuum packed silage can be classified as a fully efficient, safe, accurate and complete means for vacuum packing the most varied types of chopped green forage (B), so as to obtain, after the fermentation process inside the bag (C), the most varied types of vacuum packed silages (A) with high durability and versatility, for several farmers and/or cattle breeders in several different places, regardless of the general characteristics thereof, they are also easy to apply and to handle, and have excellent general characteristics; the sizes and dimensions may vary, depending on the use needs.

## Claims

1. Manufacturing process for producing vacuum packed silage, **characterized by** comprising the following steps:
- harvesting and chopping green forage from the fields for producing a chopped green forage mass (B);
- packing the chopped green forage mass (B) inside bags (C) and weighing said bags (C):
- compressing the chopped green forage mass (B) inside the bags (C);
- applying vacuum to the bags (C) for expelling air therefrom;
- sealing the top opening of the bags (C); and
- storing the bags (C) during a 20-30 day period for allowing the fermentation of the chopped green forage (B);
**characterized in that** the chopped green forage mass (B) is compressed while inside the bags (C), and also by comprising, before applying vacuum to the bags (C), the step of arranging a clamp (D) around a top opening of the bags (C), said clamp (D) being removed when the top opening of the bags (C) is sealed after the vacuum has been applied.

## Patentansprüche

1. Herstellungsprozess für vakuumverpackte Silage, **dadurch gekennzeichnet, dass** er folgende Schritte umfasst:
- Ernte von Grünfutter von den Feldern und dessen Häckselung zur Herstellung einer gehäckselten Grünfuttermasse (B);
- Abpacken der gehäckselten Grünfuttermasse (B) in Beutel (C) und Abwiegen besagter Beutel (C);
- Komprimieren der gehäckselten Grünfuttermasse (B) in den Beuteln (C);
- Vakuumieren der Beutel (C), um sämtliche Luft daraus zu entfernen;
- Luftdichtes Verschließen der oberen Öffnung der Beutel (C); und
- Lagerung der Beutel (C) über einen Zeitraum von 20 bis 30 Tragen, damit das gehäckselte Grünfutter (B) fermentieren Kann;
**dadurch gekennzeichnet, dass** die gehäckseite Grünfuttermasse (B) komprimiert wird, während sie sich in den Beuteln (C) befindet, sowie dadurch, dass vor dem Vakuumieren der Beutel (C) ein Schritt erfolgt, in dem eine Klemme (D) um die obere Öffnung der Beutel (C) angebracht wird, wobei besagte Klemme (D) entfernt wird, wenn die obere Öffnung der Beutel (C) nach dem Vakuumieren luftdlcht verscnlossen wird.

## Revendications

1. Procédé de fabrication pour la production de fourrage ensilé conditionné sous vide, comprenant les étapes suivantes :
- récolte dans les champs et hachage de fourrage vert pour produire une masse de fourrage vert haché (B) ;
- conditionnement de la masse de fourrage vert haché (B) dans des sacs (C) et pesage de ces sacs (C) ;
- compression de la masse de fourrage vert haché (B) dans les sacs (C) ;
- application du vide aux sacs (C) pour en extraire l'air ;
- soudure de l'ouverture supérieure des sacs (C) ; et
- entreposage des sacs (C) pendant une période de 20 à 30 jours pour permettre la fermentation du fourrage vert haché (B) ;
caractérisé pair le fait que la masse de fourrage vert haché (B) est compressée alors qu'elle se trouve à l'intérieur des sacs (C), et comprenant également, avant l'application du vide aux sacs (C), une étape de pose d'un collier de serrage (D) autour de l'ouverture supérieure des sacs (C), ledit collier (D) étant retiré lorsque l'ouverture supérieure des sacs (C) est soudée après l'application du vide.
